# FASCICULE DE BREVET EUROPEEN

(11) **EP 3 727 894 B1**
(45) Date de publication et mention de la délivrance du brevet: **15.12.2021**
(21) Numéro de dépôt: 18842806.4
(22) Date de dépôt: 21.12.2018
(51) Int. Cl.: B60C 11/03, B60C 11/00, B60C 11/02, B60C 9/20

(54) **PNEU POUR POIDS LOURD AMELIORE EN ENDURANCE**
SCHWERLASTFAHRZEUGREIFEN MIT VERBESSERTER BESTÄNDIGKEIT
HEAVY GOODS VEHICLE TYRE WITH IMPROVED ENDURANCE

(30) Priorité: 22.12.2017 FR 1763005
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: BARANGER, Eddy, 63040 Clermont-Ferrand Cedex 9 (FR)
(74) Mandataire: Millanvois, Patrick Jacques Jean
(86) Numéro de dépôt international: PCT/FR2018/053529
(87) Numéro de publication internationale: WO 2019/122791

(56) Documents cités:
- WO-A1-2012/131081
- WO-A1-2013/079336
- WO-A1-2017/103460
- WO-A1-2017/194874
- FR-A1- 2 950 565

## Description

### DOMAINE DE L'INVENTION

La présente invention concerne un pneu, à armature de carcasse radiale et plus particulièrement un pneu destiné à équiper des véhicules portant de lourdes charges et roulant à vitesse soutenue, tels que, par exemple les camions, tracteurs, remorques ou bus routiers.

### ÉTAT DE LA TECHNIQUE

D'une manière générale, un pneu pour véhicule poids lourd comprend des bourrelets destinés à être en contact avec une jante de montage, ces bourrelets se prolongeant radialement vers l'extérieur par des flancs eux-mêmes se raccordant de part et d'autre d'une partie de sommet, cette partie de sommet étant recouverte par une bande de roulement dont la fonction est d'assurer pendant le roulage le contact avec la route.

En outre, un tel pneu comprend une armature de carcasse ancrée dans les bourrelets, cette armature de carcasse s'étendant dans les flancs jusqu'au sommet du pneu. Cette armature de carcasse formée d'une ou plusieurs couches renforcées est surmontée radialement vers l'extérieur dans la partie de sommet du pneu par une armature de sommet elle-même formée d'une pluralité de couches renforcées.

Parmi les couches renforcées de l'armature de sommet on trouve au moins deux couches dite de travail, chacune de ces couches de travail comprenant une pluralité d'éléments de renforcement tels des fils ou des câbles métalliques à faible extensibilité, ces éléments de renforcement étant disposés parallèlement les uns aux autres dans chaque couche de travail et croisés d'une couche de travail à la suivante en faisant avec la direction circonférentielle du pneu un angle choisi pour être compris entre 10° et 45°.

Des câbles ou éléments de renforcement sont dits faiblement extensibles ou encore inextensibles dans la présente description lorsque lesdits câbles ont un allongement relatif au plus égal à 0,2% lorsqu'ils sont soumis à une force de traction égale à 10% de leur force de rupture.

Faisant partie de l'armature de sommet, on prévoit au moins une couche additionnelle dite couche de protection positionnée radialement à l'extérieur des couches de travail, cette couche de protection étant formée d'éléments de renforcement avantageusement « élastiques », c'est à dire des éléments de renforcement présentant une beaucoup plus grande extensibilité comparativement à l'extensibilité des éléments de renforcement des couches de travail.

Des câbles ou éléments de renforcement sont dits élastiques ou sont dits avoir une grande extensibilité dans la présente description lorsque lesdits câbles ont un allongement relatif au moins égal à 3% lorsqu'ils sont soumis à une force de traction égale à la charge de rupture et ont un module tangent maximum inférieur à 150 GPa.

L'obtention d'un câble constitué d'une pluralité de fils élémentaires métalliques pour être élastique ou bien faiblement élastique voire inextensible dépend de la façon dont les fils sont assemblés entre eux pour former ledit câble (c'est ce que l'on appelle la structure du câble).

L'armature de sommet peut également comprendre une couche de triangulation comprenant une pluralité de fils ou de câbles métalliques à faible extensibilité faisant avec la direction circonférentielle du pneu un angle choisi pour être compris entre 45° et 90°, cette couche de triangulation étant le plus souvent située radialement entre l'armature de carcasse et la première couche de travail. D'autres couches peuvent également être intégrées à l'armature de sommet, telles des couches de frettage comprenant des renforts inextensibles ou non et orientés selon un angle nul ou petit (c'est à dire inférieur à 10 degrés) avec la direction circonférentielle du pneu.

Radialement à l'extérieur de l'armature de sommet, on dispose une bande de roulement laquelle est usuellement constituée de matériaux polymériques (ou matériaux caoutchoutiques), cette bande de roulement étant destinée à assurer un contact avec une chaussée dans une aire de contact entre ladite chaussée et le pneu.

Un des objectifs poursuivis par la personne du métier, pour satisfaire aux exigences du marché du pneu pour véhicule poids lourd, est de réduire le poids total du pneu. Un moyen à sa disposition consiste à réduire la masse des éléments de renforcement et notamment ceux de l'armature de sommet.

L'allègement des éléments de renforcement des couches de travail peut s'obtenir par exemple par l'utilisation d'éléments de renforcement de plus petit diamètre comme cela est par exemple décrit dans le document US-3240249. Il faut noter que très souvent cette réduction de diamètre des éléments de renforcement s'accompagne d'une augmentation de la ténacité de l'acier. Il est ainsi connu d'utiliser des éléments de renforcement plus petits pour alléger les pneumatiques, la masse étant d'une part réduite par une quantité de métal moindre et d'autre part par une diminution du volume de mélanges élastomériques formant les calandrages des couches de travail.

Au sens de la présente invention, un « fil de grade au moins UHT, acronyme signifiant en anglais : Ultra Hight Tenacity, est un fil métallique présentant une résistance mécanique à la rupture notée R et exprimée en MPa telle que R ≥ 4180 - 2130xD, où D est le diamètre du fil exprimé en millimètres et x indique l'opération de multiplication.

Cependant, une diminution de la quantité de métal dans les couches de travail de l'armature de sommet peut conduire à une diminution de l'endurance de l'armature de sommet du pneu pouvant affecter la possibilité de renouveler sa bande de roulement par rechapage.

Notamment, lors d'un roulage accidentel sur un obstacle ponctuel de taille relativement importante par rapport au pneu et à sa bande de roulement, l'armature de sommet est soumise de façon brutale à un impact générateur d'une très grande déformation pouvant aller jusqu'à une rupture partielle voire complète d'éléments de renfort. Ce type de dommage d'origine accidentelle est classiquement qualifié de risque routier (en anglais : « *road hazard »).*

Il a été observé que la résistance à ces sollicitations de forte énergie en roulage d'un pneu dont les couches de travail sont allégées peut se révéler très significativement affectée. Cette réduction de performance peut modifier la capacité du pneu à pouvoir le moment venu être rechapé.

Un but de l'invention est ainsi de fournir des pneus pour véhicules poids-lourd, dont la masse est réduite tout en conservant des performances satisfaisantes d'endurance et de tenue aux risques routiers. Par ailleurs, il est important, pour pouvoir renouveler la bande de roulement d'un pneu après usure, que l'armature de sommet soit demeurée intègre du point de vue de ses caractéristiques et qu'elle n'ait pas subi, du fait des conditions de roulage, de perte de résistance.

En outre, dans le but d'augmenter la durée de vie sur usure des pneus, il est connu de choisir pour la bande de roulement des matériaux ayant des propriétés de résistance en usure améliorées. De tels matériaux conduisent le plus souvent à une pénalisation des propriétés d'hystérèse, c'est à dire à une augmentation des pertes énergétiques en roulage et en conséquence à une augmentation de la consommation de carburant du véhicule.

Il est également connu de réaliser la bande de roulement d'un pneu en superposant au moins deux matériaux différents afin d'obtenir, pour les applications envisagées, un meilleur compromis entre les propriétés d'usure et les pertes énergétiques liées à l'hystérèse des matériaux.

C'est par exemple le cas du document WO 2013/079336 qui décrit la superposition de deux couches de matériaux différents pour former la bande de roulement d'un pneu poids lourd, le matériau de la couche la plus à l'extérieur étant choisi pour être plus performant en terme d'usure que le matériau de la couche la plus à l'intérieur, le matériau de cette dernière couche ayant des propriétés d'hystérèse appropriées pour limiter la température de la bande de roulement au voisinage de l'armature de sommet et ainsi limiter les pertes hystérétiques dans la bande de roulement en roulage.

La couche de mélange élastomérique chargé constituant la partie radialement extérieure de la bande de roulement et destinée à être usée en roulage présente une note Z de macro dispersion supérieure à 80 et une valeur maximale de tan(δ), noté tan(δ)max, inférieure à 0.130.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour). Pour le cycle retour, on indique la valeur maximale de tan(δ) observée, noté tan(δ)max.

La résistance au roulement d'un pneu correspond à la perte d'énergie rapportée à l'énergie fournie pour faire rouler le pneu. Cette perte d'énergie se traduit par une montée en température du pneu. Cette perte d'énergie est ainsi associée aux pertes hystérétiques liées à la déformation du pneu durant un tour de roue. Les valeurs de tan(δ)max des matériaux utilisés sont mesurées à 10Hz entre 30°C et 100°C pour intégrer l'effet des différentes fréquences de déformation induites par la rotation du pneu. La valeur de tan(δ)max à 60°C correspond ainsi à un indicateur de la résistance au roulement du pneu en roulage.

Il est également possible d'estimer la caractéristique d'hystérèse des matériaux en effectuant une mesure, notamment sur des éprouvettes de matière prélevées sur un pneu, des pertes d'énergie par rebond à énergie imposée et pour une température de 60 °C.

Une note Z de macro dispersion supérieure à 80 d'un mélange élastomérique chargé signifie que la charge est dispersée dans la matrice élastomère de la composition avec une note de dispersion Z supérieure ou égale à 80.

Dans la présente description, la dispersion de charge dans une matrice élastomère est caractérisée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée ("% surface non dispersée"), telle que mesurée par l'appareil "disperGRADER+ " fourni avec son mode opératoire et son logiciel d'exploitation " disperDATA " par la société Dynisco en appliquant la formule suivante Z = 100 - (% surface non dispersée) /0.35

Le pourcentage de surface non dispersée est, quant à lui, mesuré grâce à une caméra observant la surface de l'échantillon sous une lumière incidente à 30 degrés. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S. Otto dans le document précité.

Plus la note Z est haute, meilleure est la dispersion de la charge dans la matrice en caoutchouc (une note Z de 100 correspondant à une dispersion parfaite et une note Z de 0 à une dispersion médiocre). On considérera qu'une note Z supérieure ou égale à 80 correspond à une très bonne dispersion de la charge dans la matrice élastomère.

La couche de mélange élastomérique placée au plus près de l'armature de sommet et formant l'autre couche présente un allongement à la rupture à 60°C supérieur à 600 %.

Dans ce même document WO 2013/079336**,** il est indiqué qu'il est avantageux de choisir le matériau de la bande de roulement situé au plus près de l'armature de sommet parmi les matériaux ayant une énergie à la rupture supérieure à 165 MJ.

Les essais de traction permettent de déterminer les caractéristiques d'élasticité et les propriétés à la rupture du matériau de la bande de roulement. Ils sont effectués conformément à la norme AFNOR- NF-T-46-002 de septembre 1988. On mesure en seconde élongation (c'est à dire après un cycle d'accommodation au taux d'extension prévu pour la mesure elle-même) le module sécant nominal (ou contrainte apparente) en MPa à 100% d'allongement ou à 10% d'allongement. Les mesures de traction pour déterminer les modules accommodés sécants sont effectuées à la température de 23°C +/-2°C, et dans les conditions normales d'hygrométrie (50 +/- 5% d'humidité relative), selon la norme française NF T 40-101 (décembre 1979).

Les contraintes à la rupture (en MPa) et les allongements à la rupture (en %) du matériau de bande de roulement sont également mesurés. Les essais de traction en vue de déterminer les propriétés de rupture sont effectués à la température de 60°C ± 2°C, et dans les conditions normales d'hygrométrie (50 ± 5% d'humidité relative), selon la norme française NF T 40-101 (décembre 1979) sur des éprouvettes prélevées sur un pneu vulcanisé.

Des pneus réalisés selon le document WO 2013/079336 ont montré une amélioration des performances et permettent d'envisager la possibilité d'au moins un rechapage lorsque cette bande de roulement initiale est usée.

Le document US 2010/0186860 décrit un pneu ayant sur la région centrale de sa bande de roulement un dessin de sculpture dit "compact" c'est à dire un dessin ne comprenant pas à l'état neuf de rainure ouverte sur la surface de roulement mais uniquement des incisions. Grâce à cette disposition, il est possible de réduire les agressions mécaniques sur l'armature de sommet.

Le document EP 2292448 B1 décrit un pneu dont le dessin de sculpture comprend deux rainures ouvertes sur la surface de roulement à neuf, ces rainures délimitant axialement une région centrale, cette région centrale étant pourvue d'au moins 1 incision et ayant un taux de creux volumique à neuf inférieur à 10%.

Le document WO2017194874 montre aussi un pneu pertinent par rapport à l'invention.

### Définitions :

Une direction radiale d'un pneu est une direction coupant l'axe de rotation du pneu et perpendiculaire à celui-ci. L'expression « radialement intérieur à, respectivement radialement extérieur à » signifie « dont la distance radiale mesurée à partir de l'axe de rotation du pneu est inférieure à, respectivement supérieure à ».

Une direction axiale ou direction transversale désigne une direction qui est parallèle à l'axe de rotation du pneu.

Une direction circonférentielle désigne une direction qui est tangente à tout cercle centré sur l'axe de rotation du pneu.

Une découpure désigne de façon générale une cavité réalisée dans une bande de roulement, cette cavité pouvant prendre la forme d'une rainure ouverte sur la surface de roulement, d'une incision également ouverte sur la surface de roulement, d'un creux ou canal formé pour être entièrement sous la surface de roulement à neuf, ou encore d'une combinaison d'incision et de creux.

Une rainure désigne un espace ou cavité formé dans une bande de roulement, cette rainure étant délimité par des parois de matière en vis-à-vis réunies par un fond de rainure. Chaque rainure a une profondeur au plus égale à l'épaisseur de la bande, et les parois de matière la délimitant ne viennent pas en contact l'une contre l'autre dans les conditions usuelles de roulage du pneu.

Une incision désigne l'espace formé dans une bande de roulement entre des parois de matière en vis-à-vis sur une profondeur au plus égale à l'épaisseur de la bande, lesdites parois de l'incision étant aptes à venir en contact l'une contre l'autre, au moins en partie, dans des conditions usuelles de roulage du pneu.

Un canal désigne un volume de creux formé en totalité à l'intérieur d'une bande de roulement, ce canal ayant une section de largeur maximale et de hauteur maximale. Un canal peut être relié à au moins un autre canal pour former un réseau d'écoulement de fluide dans la bande de roulement. De même, un canal peut être relié à au moins une incision. Un canal peut former une nouvelle rainure ouverte sur la surface de roulement après une usure partielle prédéterminée de la bande de roulement.

La bande de roulement d'un pneu a une épaisseur adaptée pour un usage donné et est en outre pourvue d'un dessin de sculpture. Ce dessin de sculpture est formé d'éléments de relief tels des nervures et des blocs, ces éléments de relief étant délimités par des rainures, incisions et de façon générale par des creux et découpures. Ces creux et découpures ont en outre pour fonction d'évacuer l'eau éventuellement présente sur la chaussée afin d'assurer un bon contact entre la bande de roulement et ladite chaussée.

Un élément de relief présente une face de contact, cette face étant destinée à venir en contact avec la chaussée pendant le roulage, et des faces latérales coupant la face de contact selon des arêtes.

La surface de roulement d'une bande de roulement désigne l'ensemble des faces de contact de tous les éléments de relief d'une bande de roulement venant au contact d'une chaussée lors du roulage.

Certains pneus actuels, dits "routiers", sont destinés à rouler à grande vitesse et sur des trajets de plus en plus longs. Grâce notamment à l'amélioration du réseau routier, à la croissance du réseau autoroutier et à l'augmentation des échanges internationaux, il a été constaté que les pneus ont vu leurs performances en usure augmentées, ce qui se traduit par des distances parcourues augmentées. Cette augmentation peut se trouver contrebalancée par le fait que l'armature de sommet est davantage sollicitée.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Ce constat justifie les recherches engagées par la Déposante pour profiter au mieux des potentialités de ces nouvelles combinaisons.

### BREF EXPOSE DE L'INVENTION

Un objectif de l'invention est d'améliorer la capacité d'un pneu à pouvoir être rechapé, pneu pour lequel l'armature de sommet est allégée en masse en mettant en œuvre à en combinaison à la fois un matériau de bande de roulement et un dessin de sculpture spécifique.

Dans ce but, il est proposé un pneu pour véhicule poids lourd comprenant des bourrelets destinés à être en contact avec une jante de montage, ces bourrelets se prolongeant radialement vers l'extérieur par des flancs eux-mêmes se raccordant de part et d'autre d'une partie de sommet, cette partie de sommet étant recouverte radialement à l'extérieur par une bande de roulement ayant une épaisseur totale de matière à user déterminant une limite d'usure et ayant une surface de roulement pour venir au contact d'une chaussée. Cette bande de roulement comprend au moins deux découpures d'orientation générale circonférentielle. Les deux découpures circonférentielles axialement les plus espacées l'une de l'autre délimitant dans la bande de roulement une région centrale et de part et d'autre deux régions de bord, la partie centrale ayant une largeur Lc comprise entre 35 et 70% de la largeur totale W de la bande de roulement.

Ce pneu comprend une armature de carcasse ancrée dans les bourrelets et s'étendant dans les flancs et dans la partie de sommet, la partie de sommet du pneu comprenant une armature de sommet radialement à l'extérieur de l'armature de carcasse. L'armature de sommet comprend au moins deux couches de travail comportant des éléments de renforcement orientés parallèlement les uns aux autres dans une même couche et dont les éléments de renforcement sont constitués de câbles composés de fils de nuance « UHT », c'est à dire de câbles dont les fils élémentaires présentent une résistance mécanique à la rupture R satisfaisant la relation suivante :

R ≥ 4180 - 2130xD, où R est exprimée en MPa et D est le diamètre du fil exprimé en millimètres (x indique l'opération de multiplication).

Cette bande de roulement est par ailleurs formée d'au moins deux couches de matériaux superposées dans la direction radiale, une première couche et une deuxième couche, la première couche étant radialement plus proche de l'armature de sommet que la deuxième couche, le matériau composant la première couche étant choisi pour avoir un allongement à la rupture supérieure à 600 % à une température de 60°C.

Cette bande de roulement est en outre telle que :
- sur la partie centrale de la bande de roulement surmontant radialement l'armature de sommet et délimitée axialement par les découpures circonférentielles axialement les plus à l'extérieur, il est formé, au moins dans le matériau formant la deuxième couche radialement la plus à l'extérieur de la bande de roulement, au moins un creux caché à l'intérieur de la bande de roulement, ce creux caché (72) pouvant être prolongé vers la surface de roulement par une incision (71), de telle sorte qu'un taux creux volumique à neuf défini entre la surface de roulement et une surface parallèle à la surface de roulement et passant par les points les plus à l'intérieur des découpures est au plus égal à 10%,
- sur cette partie centrale de la bande de roulement le taux de creux surfacique de la bande de roulement à neuf et sur toute surface jusqu'à une profondeur égale à au moins 50% de l'épaisseur à user est au plus égal à 10 %.

Grâce à cette combinaison, il est possible d'obtenir un pneu préservant une bonne aptitude à être rechapé. Dans cette invention, la sculpture affectant la partie centrale de la bande de roulement est de type fermée ou compacte *a contrario* des sculptures usuelles comprenant des rainures ouvertes sur la bande de roulement et ayant une grande profondeur correspondant à la limite d'usage en usure.

Les régions de bord peuvent néanmoins comprendre des rainures circonférentielles et/ou des rainures transversales ou obliques.

L'épaisseur de matière à user correspond en règle générale à la distance séparant la surface de roulement à neuf de la bande de roulement aux points des incisions ou canaux les plus à l'intérieur de la bande.

Le dessin de sculpture de la bande de roulement à neuf permet d'avoir à la fois une grande rigidité structurelle sur la partie centrale de la bande de roulement grâce au plus grand volume de matière à l'état neuf.

Par ailleurs la formation d'une sculpture compacte dans la partie centrale de la bande de roulement protège à la fois la première couche de matériau de bande de roulement la plus proche de l'armature de sommet et l'armature de sommet elle-même. En effet, cette sculpture compacte limite les risques de pénétration d'objets agressifs dans la bande de roulement dans cette partie centrale de la bande tout au moins dans un premier temps (c'est à dire avant apparition des nouvelles rainures).

Grâce à son allongement à rupture élevé (supérieur à 600%), la première couche radialement la plus à l'intérieur de la bande de roulement permet d'atteindre des distances avant rechapage plus importantes que celles réalisées avec des pneus de l'art antérieur. Lorsque la couche la plus à l'extérieur de la bande de roulement est usée et donc que la bande de roulement devient moins épaisse, les pneus deviennent plus sensibles à certains types d'agressions comme le ripage, les coupures, la pénétration de petits cailloux ou autres objets. Par ripage on entend une usure de la bande de roulement qui intervient notamment lors de roulage sur des ronds-points ou bien lors de manœuvres sur parking. Après usure partielle, l'apparition de la première couche radialement la plus à l'intérieur de la bande de roulement et ayant un allongement à la rupture supérieur à 600 % conduit à une meilleure résistance à ce type d'agression.

Un moyen d'obtenir sur la partie centrale de la bande de roulement un faible taux de creux volumique consiste à former au moins dans le matériau formant la couche radialement la plus à l'extérieur de la bande de roulement au moins un creux caché à l'intérieur de la bande de roulement, ce creux caché pouvant être prolongé vers la surface de roulement par une incision.

La présence d'éventuelles incisions dans la partie centrale permet de générer des arêtes utiles pour l'adhérence en roulage ; cette présence est compensée par la propriété de ces incisions de se fermer pour mettre leurs parois en vis-à-vis en contact l'une contre l'autre. En outre, la présence de canaux radiaux formés sous la surface de roulement assure une capture de l'eau présente par temps de pluie sur cette zone centrale, ce qui est favorable à l'adhérence du pneu lors du roulage.

La formation de creux cachés est décrite notamment dans le document US9022083 B1 lequel combine des canaux cachés dans l'épaisseur d'une bande de roulement, ces canaux étant surmontés d'incisions se croisant pour former un réseau ; en outre, des canaux radiaux sont formés aux intersections des incisions.

Dans une autre façon de faire, comme décrite dans le document EP2694301 B1, il est formé un réseau de rainures comprenant une succession de partie ouvertes sur la surface de roulement à neuf et de parties fermées, ces dernières étant cachées dans l'épaisseur de la bande de roulement. Ces rainures peuvent être vues comme des rainures ondulantes entre la surface de roulement à neuf et une profondeur maximale. Dans ce cas également, le taux de creux volumique est très sensiblement réduit par rapport aux pneus dont les bandes de roulement sont pourvues de rainures usuelles.

Avantageusement, la bande de roulement d'un pneu selon l'invention est formée d'au moins deux couches de matériaux différents, une première couche proche de l'armature de sommet tel que précédemment défini et surmontée radialement sur l'extérieur par une deuxième couche, cette deuxième couche ayant les propriétés suivantes : une note Z de macro dispersion supérieure à 80 et une valeur maximale de tan(δ), noté tan(δ)max, inférieure à 0.130.

Selon un mode de réalisation préféré de l'invention, l'allongement à la rupture de la deuxième couche constituant la partie radialement extérieure de la bande de roulement est inférieur à celui première couche radialement la plus à l'intérieur.

De préférence encore, l'énergie à la rupture de la première couche est supérieure à celle de la deuxième couche constituant la partie radialement extérieure de la bande de roulement.

Selon une variante avantageuse de l'invention, le rapport du volume de la première couche sur la somme des volumes des première et deuxième couches est compris entre 25 % et 70%.

Le profil de la première couche vu dans un plan de coupe contenant l'axe de rotation du pneu est approprié pour que cette première couche apparaisse de façon homogène au moins sur toute la largeur de la partie centrale de la bande de roulement après usure partielle de la bande de roulement.

Avantageusement encore, le rapport entre l'épaisseur de la première couche de la bande de roulement, mesurée sur une coupe méridienne du pneu selon la direction radiale à l'extrémité axiale de la couche de travail radialement la plus extérieure, et la somme des épaisseurs des première et deuxième couches de la bande de roulement, est compris entre 15 et 50 %.

Avantageusement, la largeur Lc de la partie centrale de la bande de roulement délimitée par les découpures circonférentielles axialement les plus à l'extérieur est au moins égale à 50% et au plus 70% de la largeur totale W de la bande de roulement.

Pour encore améliorer la rechapabilité potentielle d'un pneu, il est préférable de limiter le taux de creux volumique de la partie centrale de la bande de roulement à au plus 6%.

Une variante avantageuse de l'invention prévoit encore la présence d'une couche intermédiaire radialement entre la bande de roulement et l'armature de sommet, le matériau composant cette couche intermédiaire étant choisi pour avoir une valeur maximale de tan(δ) au plus égale à 0.100. La présence de cette couche intermédiaire peut notamment permettre de compenser l'élévation de température conséquence de la présence d'une première couche dissipative. Cette couche n'est a priori pas destinée à venir en contact usant avec la chaussée en roulage.

Avantageusement encore, la couche intermédiaire présente une perte à 60 °C au plus égale à 20 %.

Avantageusement, toutes les couches de l'armature sommet sont constituées de câbles formés de fils de nuance UHT.

Avantageusement, l'armature de carcasse lorsqu'elle est constituée de câbles métalliques peut être formée avec des câbles de fils de nuance UHT.

Dans une variante intéressante, les creux cachés formés dans la partie centrale de la bande de roulement sont en grande partie présents dans la première couche radialement la plus à l'intérieur de la bande de roulement.

Selon l'un quelconque des modes de réalisation de l'invention évoqués précédemment, l'armature de sommet peut encore être complétée, radialement entre l'armature de carcasse et la couche de travail radialement intérieure la plus proche de ladite armature de carcasse, par une couche dite de triangulation constituée d'éléments de renforcement inextensibles métalliques faisant, avec la direction circonférentielle, un angle supérieur à 60°, les éléments de renforcement de cette couche de triangulation étant eux aussi formés de fils de nuance UHT.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue partielle en coupe d'une variante d'un pneu pourvu d'une bande de roulement selon l'invention ;
La figure 2 montre une vue surfacique de la bande de roulement selon une autre variante de l'invention ;
La figure 3 montre une vue en coupe de la variante de bande de roulement selon l'invention montrée avec la figure 2.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

Selon l'invention, les mesures de volume et d'épaisseurs sont réalisées sur des pneus à l'état neuf c'est à dire des pneus n'ayant pas roulé et donc ne présentant aucune usure de la bande de roulement. Il en est de même des caractéristiques physiques des matériaux caoutchoutiques et des matériaux de renfort.

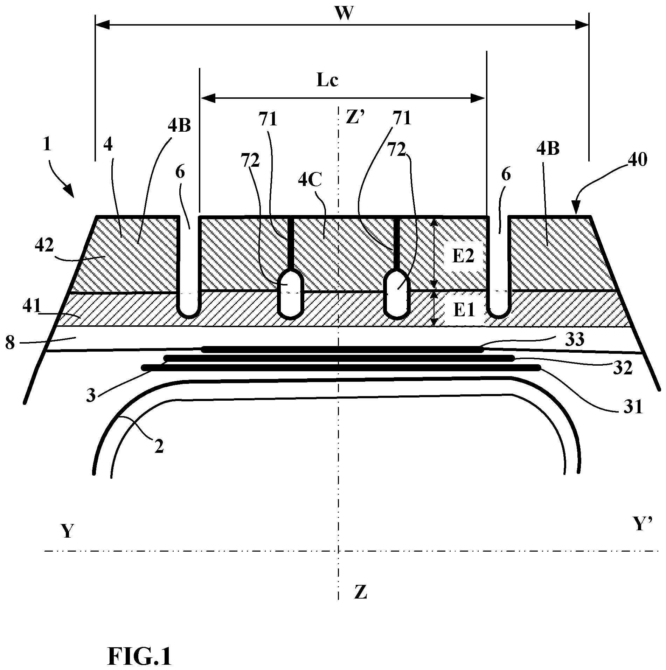

Sur la figure 1, on voit en coupe méridienne (c'est à dire dans un plan contenant l'axe de rotation YY') une partie d'un pneu 1 de dimension **385/55 R22.5** destiné à équiper véhicule poids lourd, ce pneu 1 comprenant une armature de carcasse 2 surmontée radialement à l'extérieur par une armature de sommet 3. Ce pneu 1 comprend en outre radialement à l'extérieur de l'armature de sommet 3 une bande de roulement 4 formée selon l'invention. Cette bande de roulement 4 a une largeur totale W qui correspond à la largeur moyenne de la bande de roulement venant en contact avec une chaussée dans des conditions d'usage du pneu à vitesse nulle. Cette largeur W est dans le cas présent égale à 320 mm. Cette bande de roulement 4 comprend radialement à l'extérieur une surface de roulement 40 destinée à être en contact avec la chaussée lors du roulage du pneu.

L'armature de sommet 3 comprend trois couches de renforcement : deux couches de travail 31, 32 renforcées chacune par des éléments de renforcement inextensibles et parallèles entre eux dans chaque couche, ces éléments de renforcement étant croisés d'une couche à l'autre en faisant avec la direction circonférentielle un angle voisin de 18 degrés. Radialement à l'extérieur, ces couches de travail 31, 32 sont surmontées par une couche de protection 33 destinée à assurer une protection des couches de travail et de l'armature de carcasse contre les agressions mécaniques en roulage. Cette couche de protection 33 est essentielle puisqu'elle conditionne en partie la possibilité d'un rechapage du pneu c'est à dire la possibilité de reconstruire un pneu en remettant en place une bande de roulement après avoir atteint une usure préalablement déterminée. Cette couche de protection 33 est formée par une pluralité d'éléments de renforcement dits "élastiques", c'est à dire présentant un important allongement structurel sous faible effort, ces éléments de renforcement étant orientés par rapport à la direction circonférentielle avec un angle égal à 18 degrés et de même sens que l'angle formé par les éléments inextensibles de la couche de travail qui lui est radialement adjacente.

Chaque couche de travail 31, 32 de l'armature de sommet 3 comprend une pluralité de câbles de formule 9-35 (9 fils élémentaires de 0.35 mm de diamètre), chaque fil étant réalisé dans une nuance d'acier UHT ayant une résistance à rupture R égale à 3620 MPa.

La couche de protection 33 est constituée d'une pluralité de câbles formés chacun avec 6 fils de 0.35 mm de diamètre.

La bande de roulement 4 est formée par la superposition d'une première couche 41 d'épaisseur El égale à 4 mm et d'une deuxième couche 42 d'épaisseur E2 égale à 8 mm, chacune de ces deux couches étant formée dans un matériau qui lui est propre.

Le matériau constituant la première couche 41 la plus proche de l'armature de sommet 3 présente un allongement à rupture égal à 630 %, une contrainte de rupture égale à 22 MPa et une caractéristique d'hystérèse tan(δ)max égale à 0.151.

Le matériau constituant la deuxième couche 42, destinée à être en contact avec la chaussée en roulage à neuf, présente un allongement à rupture égal à 580%, une contrainte de rupture égale à 20.5 MPa et une caractéristique d'hystérèse tan(δ)max égale à 0.125.

Comme on le voit sur cette figure 1, cette bande de roulement 4 est pourvue de deux rainures circonférentielles 6 s'ouvrant à neuf sur la surface de roulement 40 et faisant le tour complet du pneu ; ces deux rainures circonférentielles 6 ont une profondeur égale à 11 mm.

Ces deux rainures circonférentielles 6 délimitent entre elles une région centrale 4C de largeur Lc égale à 193 mm (représentant 60.3% de W) et des régions de bord 4B dépourvues de toute découpure dans la variante décrite (les limites de cette région centrale coïncident avec les parois latérales axialement les plus proches du plan médian ZZ').

On note que la région centrale 4C est dépourvue de toute rainure ouverte sur la surface de roulement 40 à neuf. Les rainures circonférentielles 6 sont localisées axialement à l'extérieur des extrémités de la couche de protection 33 et axialement à l'intérieur des extrémités des couches de travail 31, 32.

Toutefois, la région centrale 4C est pourvue de deux incisions circonférentielles 71 s'étendant dans la profondeur de la bande de roulement 4 sur une profondeur égale 6 mm.

Ces deux incisions 71 de largeur 0.6 mm sont prolongées par des canaux 72 de largeur maximale 6 mm et de hauteur 6 mm, ces canaux 72 étant destinés à former de nouvelles rainures ouvertes sur la surface de roulement après une usure partielle de la bande de roulement correspondant à une usure égale à au moins 6 mm. Lorsque ces nouvelles rainures s'ouvrent sur la surface de roulement après usure partielle, le matériau en contact avec la chaussée correspond encore au matériau formant la deuxième couche 42 de la bande de roulement 4 c'est à dire le matériau le plus à l'extérieur radialement à l'état neuf.

Dans la région centrale 4C, le taux de creux volumique à neuf est égal à 4%. Dans cette même région centrale 4C, le taux de creux surfacique à neuf est égal à 1% et est conservé jusqu'à apparition des nouvelles rainures formées par les canaux 72.

En outre, dans cette variante, il est prévu radialement sous la bande de roulement 4 une couche additionnelle 8 d'une épaisseur moyenne égale à 4 mm sensiblement constante sur toute la largeur du sommet du pneu, le matériau composant cette couche additionnelle 8 étant choisi pour avoir une valeur de tan(δ)max égale dans le cas présent à 0.08. Cette couche additionnelle 8 n'est *a priori* pas destinée à venir en contact avec la chaussée pendant le roulage du pneu.

Avantageusement encore, la couche additionnelle 8 a une perte hystérétique mesurée à 60 °C égale à 9.5%.

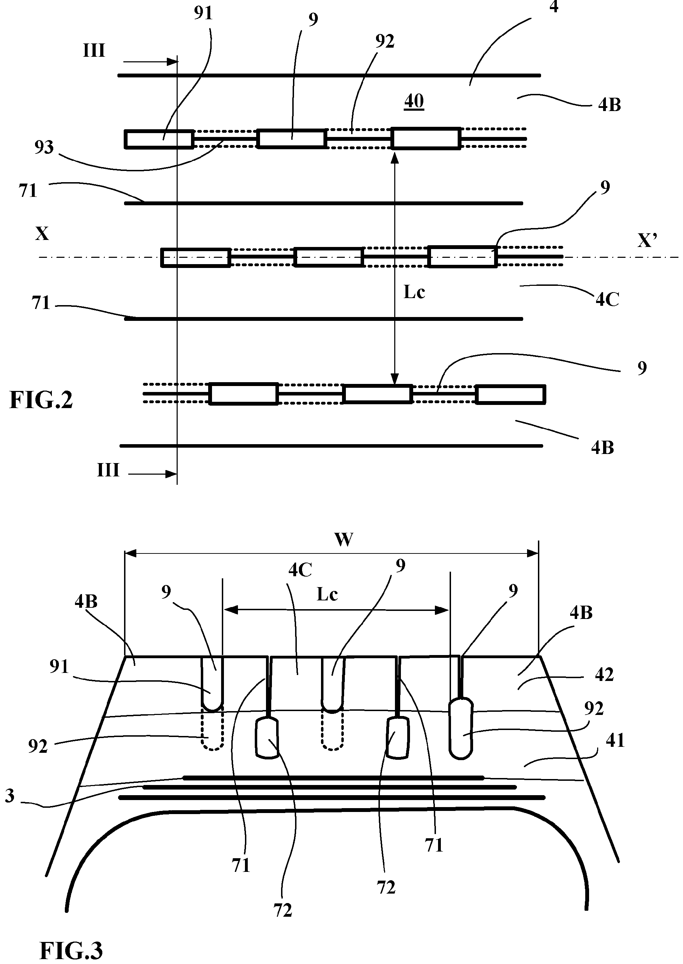

La figure 2 montre une variante de bande de roulement 4 selon l'invention, cette bande de roulement étant dépourvue de toute rainure ouverte de façon continue à l'état neuf sur la surface de roulement 40. Selon cette variante, la bande de roulement 4 est pourvue de trois rainures ondulantes 9 dans l'épaisseur de la bande de roulement 4 et intercalées entre ces rainures ondulantes deux incisions 71 prolongées dans l'épaisseur de la bande de roulement par un canal 72.

Chaque rainure ondulante 9 s'étend dans la direction circonférentielle XX' et comprend une pluralité de parties ouvertes 91 sur la surface de roulement 40 de la bande de roulement à neuf, ces parties ouvertes 91 se prolongeant vers l'intérieur de la bande de roulement par des parties de liaison rejoignant des parties cachées 92 afin d'assurer à neuf une continuité d'écoulement de fluide dans la rainure ondulante 9. Afin de faciliter le moulage et le démoulage il est formé une incision 93 connectant les parties cachées 92, les parties de liaison et les parties ouvertes 91.

Comme on peut le voir sur la figure 3 complémentaire de la figure 2 en ce qu'elle montre une coupe selon un plan dont la trace est repérée par la ligne III-III sur la figure 2, les parties cachées 92 des rainures ondulantes 9 sont dimensionnées pour s'ouvrir sur la surface de roulement de la bande de roulement 4 après une usure partielle prédéterminée et avant que les parties ouvertes 91 soient totalement effacées.

Les rainures ondulantes 9 axialement les plus à l'extérieur déterminent une partie centrale 4C de la bande de roulement et de part et d'autre des parties de bord 4B. La largeur Lc de la partie centrale 4C est évaluée dans le présent cas comme la distance moyenne séparant les parois axialement internes des rainures ondulantes 9 axialement les plus à l'extérieur.

Intercalées entre les rainures ondulantes 9, il est formé des incisions 71 se fermant au passage dans le contact lors du roulage d'un pneu pourvu de cette bande de roulement, ces incisions 71 se prolongeant dans l'épaisseur de la bande de roulement par des canaux 72 destinés à former de nouvelles rainures après usure partielle de la bande de roulement. Dans cet exemple, la largeur maximale des canaux 72 est identique à la largeur des parties cachées 92 des rainures ondulantes 9. Le fond de chaque canal 72 se trouve être à la même distance de la surface de roulement 40 que le fond des parties cachées 92 des rainures ondulantes.

En outre et comme cela est visible sur la figure 3, la bande de roulement 4 comprend une première couche (interne) 41 et une deuxième couche (externe) 42, la deuxième couche 42 étant destinée à venir en contact usant avec la chaussée avant la première couche (interne) 41. La première couche (interne) 41 est directement en contact avec l'armature de sommet 3 dans cette variante.

L'épaisseur de la deuxième couche 42 de la bande de roulement 4 est appropriée pour coïncider sensiblement avec le fond des parties ouvertes 91 des rainures ondulantes 9. Le matériau composant la première couche est choisi pour avoir un allongement à la rupture supérieur à 600 % à une température de 60°C.

Dans cette deuxième variante l'armature de sommet 3 comprend deux couches de travail comportant des éléments de renforcement orientés parallèlement les uns aux autres dans une même couche et dont les éléments de renforcement sont constitués de câbles composés de fils de nuance « UHT », c'est à dire de câbles dont les fils élémentaires présentent une résistance mécanique à la rupture R satisfaisant la relation suivante :
R (MPa) ≥ 4180 - 2130xD, où D est le diamètre du fil exprimé en millimètres.

Cette bande de roulement est en outre telle que :
- sur la partie centrale 4C de la bande de roulement 4 surmontant radialement l'armature de sommet 3 et délimitée axialement par les découpures 9 axialement les plus à l'extérieur, il est défini un taux de creux volumique à neuf entre la surface de roulement et une surface parallèle à la surface de roulement passant par les points les plus à l'intérieur des découpures, ce taux de creux volumique étant au plus égal à 10%,
- sur cette partie centrale 4C de la bande de roulement le taux de creux surfacique de la bande de roulement à neuf et sur toute surface considérée jusqu'à une profondeur égale à au moins 50% de l'épaisseur à user est au plus égal à 10 %.

L'invention, qui a été décrite avec le support de deux variantes, ne saurait bien sûr être limitée celles-ci et diverses modifications peuvent y être apportées sans sortir de son cadre tel que défini par les revendications.

## Revendications

1. Pneu (1) de véhicule poids lourd comprenant des bourrelets destinés à être en contact avec une jante de montage, ces bourrelets se prolongeant radialement vers l'extérieur par des flancs eux-mêmes se raccordant de part et d'autre d'une partie de sommet, cette partie de sommet étant recouverte radialement à l'extérieur par une bande de roulement (4) ayant une épaisseur totale de matière à user déterminant une limite d'usure et ayant une surface de roulement (40) pour venir au contact d'une chaussée, cette bande de roulement (4) comprenant au moins deux découpures d'orientation générale circonférentielle, les deux découpures circonférentielles axialement les plus espacées l'une de l'autre délimitant dans la bande de roulement (4) une région centrale (4C) et deux régions de bord (4B), la partie centrale (4C) ayant une largeur Lc comprise entre 35 et 70% de la largeur totale W de la bande de roulement (4), ce pneu (1) comprenant une armature de carcasse (2) ancrée dans les bourrelets et s'étendant dans les flancs et dans la partie de sommet, la partie de sommet du pneu comprenant une armature de sommet (3) radialement à l'extérieur de l'armature de carcasse, l'armature de sommet (3) comprenant au moins deux couches de travail (31, 32) comportant des éléments de renforcement orientés parallèlement les uns aux autres dans une même couche, ces éléments de renforcement étant des câbles constitués de fils de nuance « UHT », c'est à dire de fils présentant une résistance mécanique à la rupture R satisfaisant la relation suivante :
R ≥ 4180 - 2130xD, où R est exprimé en mégaPascal (MPa) et D est le diamètre du fil exprimé en millimètres,
cette bande de roulement (4) étant formée d'au moins deux couches de matériaux superposées dans la direction radiale, une première couche (41) et une deuxième couche (42), la première couche (41) étant radialement plus proche de l'armature de sommet (3) que la deuxième couche (42), cette bande de roulement (4) étant **caractérisée en ce que** :
le matériau composant la première couche (41) est choisi pour avoir un allongement à la rupture supérieure à 600 % à une température de 60°C,
- sur la partie centrale (4C) de la bande de roulement (4) surmontant radialement l'armature de sommet (3) et délimitée axialement par les découpures (6, 9) axialement les plus à l'extérieur, il est formé, au moins dans le matériau formant la deuxième couche (42) radialement la plus à l'extérieur de la bande de roulement, au moins un creux caché (72) à l'intérieur de la bande de roulement, ce creux caché (72) pouvant être prolongé vers la surface de roulement par une incision (71), de telle sorte qu'un taux creux volumique à neuf défini entre la surface de roulement et une surface parallèle à la surface de roulement et passant par les points les plus à l'intérieur des découpures est au plus égal à 10%, et **en ce que**
- sur cette partie centrale (4C) de la bande de roulement (4), le taux de creux surfacique à neuf et sur toute surface jusqu'à une profondeur égale à au moins 50% de l'épaisseur à user est au plus égal à 10 %.

2. Pneu (1) selon la revendication 1 **caractérisé en ce que** la bande de roulement (4) de ce pneu est formée d'au moins deux couches de matériaux différents, la deuxième couche (42) la plus à l'extérieur ayant une note Z de macro dispersion supérieure à 80, signifiant que la charge est dispersée dans la matrice élastomère de la composition avec une note de dispersion Z supérieure ou égale à 80, et une valeur maximale de tan(δ), notée tan(δ)max, inférieure à 0.130, étant mesurée selon la norme ASTM D5992-96 à la fréquence de 10Hz et à une température de 60°C.

3. Pneu (1) selon la revendication 1 ou la revendication 2 **caractérisé en ce que** l'allongement à la rupture de la deuxième couche constituant la partie radialement extérieure de la bande de roulement est inférieur à celui de la première couche radialement la plus à l'intérieur.

4. Pneu (1) selon l'une quelconque des revendications 1 à 3 **caractérisé en ce que** l'énergie à la rupture de la première couche (41) est supérieure à celle de la deuxième couche (42).

5. Pneu (1) selon l'une quelconque des revendications 1 à 4 **caractérisé en ce que** le rapport du volume de la première couche (41) la plus à l'intérieur sur la somme des volumes des première et deuxième couches de la bande de roulement est compris entre 25 % et 70 %.

6. Pneu (1) selon l'une quelconque des revendications 1 à 5 **caractérisé en ce que** le profil de la première couche (41) vu dans un plan de coupe contenant l'axe de rotation du pneu est approprié pour que cette première couche (41) apparaisse de façon homogène au moins sur toute la largeur de la partie centrale (4C) de la bande de roulement après usure partielle de ladite bande.

7. Pneu (1) selon l'une quelconque des revendications 1 à 6 **caractérisé en ce que** le rapport entre l'épaisseur de la première couche de la bande de roulement, mesurée sur une coupe méridienne du pneu selon la direction radiale à l'extrémité axiale de la couche de travail radialement la plus extérieure, et la somme des épaisseurs des première et deuxième couches de la bande de roulement, est compris entre 15 et 50 %.

8. Pneu (1) selon l'une quelconque des revendications 1 à 7 **caractérisé en ce qu'**il est intercalé une couche intermédiaire (8) radialement entre la bande de roulement (4) et l'armature de sommet (3), le matériau composant cette couche intermédiaire (8) étant choisi pour avoir une valeur de tan(δ)max au plus égale à 0.100, étant mesurée selon la norme ASTM D5992-96 à la fréquence de 10Hz et à une température de 60°C.

9. Pneu (1) selon la revendication 8 **caractérisé en ce que** la couche intermédiaire (8) a une perte à 60 °C au plus égale à 20 %.

10. Pneu (1) selon l'une quelconque des revendications 1 à 9 **caractérisé en ce que** le taux de creux volumique de la partie centrale (4C) est au plus égal à 6%.

11. Pneu (1) selon l'une quelconque des revendications 1 à 10 **caractérisé en ce que** les creux cachés (72) formés dans la partie centrale (4C) de la bande de roulement sont en grande partie présents dans la première couche (41) radialement la plus à l'intérieur de la bande de roulement.

## Patentansprüche

1. Reifen (1) für einen Lastkraftwagen, umfassend Wülste, die dazu bestimmt sind, mit einer Montagefelge in Kontakt zu stehen, wobei sich diese Wülste über Flanken radial nach außen verlängern, die selbst beiderseits eines Scheitelabschnitts anschließen, wobei dieser Scheitelabschnitt radial außerhalb von einem Laufstreifen (4) bedeckt ist, der eine Gesamtdicke aus Verschleißmaterial aufweist, die eine Verschleißgrenze bestimmt und eine Lauffläche (40) aufweist, um mit einer Fahrbahn in Kontakt zu treten, wobei dieser Laufstreifen (4) mindestens zwei Ausschnitte mit allgemeiner Orientierung in Umfangsrichtung umfasst, wobei die zwei Ausschnitte in Umfangsrichtung, die axial am weitesten voneinander beabstandet sind, im Laufstreifen (4) einen mittleren Bereich (4C) und zwei Randbereiche (4B) begrenzen, wobei der mittlere Abschnitt (4C) eine Breite Lc zwischen 35 und 70 % der Gesamtbreite W des Laufstreifens (4) aufweist, wobei dieser Reifen (1) eine Karkassenarmierung (2) aufweist, die in den Wülsten verankert ist und sich in den Flanken und im Scheitelabschnitt erstreckt, wobei der Scheitelabschnitt des Reifens eine Scheitelarmierung (3) radial außerhalb der Karkassenarmierung umfasst, wobei die Scheitelarmierung (3) mindestens zwei Arbeitsschichten (31, 32) umfasst, die Verstärkungselemente aufweist, die in einer selben Schicht parallel zueinander orientiert sind, wobei diese Verstärkungselemente Seile sind, die von Drähten des Gütegrads "UHT" gebildet sind, das heißt von Drähten, die eine mechanische Reißfestigkeit R aufweisen, die dem folgenden Verhältnis entspricht:
R ≥ 4180 - 2130 x D, wobei R in Megapascal (MPa) ausgedrückt ist und D der Durchmesser des Drahts ist, der in Millimeter ausgedrückt ist,
wobei dieser Laufstreifen (4) von mindestens zwei Materialschichten, die in der radialen Richtung übereinander gelagert sind, einer ersten Schicht (41) und einer zweiten Schicht (42), gebildet ist, wobei die erste Schicht (41) der Scheitelarmierung (3) näher ist als die zweite Schicht (42), wobei dieser Laufstreifen (4) **dadurch gekennzeichnet ist, dass**:
das Material, das die erste Schicht (41) bildet, dafür gewählt ist, dass es eine Reißdehnung größer als 600 % bei einer Temperatur von 60 °C aufweist,
- wobei auf dem mittleren Abschnitt (4C) des Laufstreifens (4), der die Scheitelarmierung (3) radial überdeckt und axial von den axial äußersten Ausschnitten (6, 9) begrenzt ist, wenigstens in dem Material, das die radial äußerste zweite Schicht (42) des Laufstreifens bildet, mindestens ein versteckter Hohlraum (72) innerhalb des Laufstreifens ausgebildet ist, wobei dieser versteckte Hohlraum (72) durch einen Einschnitt (71) so in Richtung der Lauffläche verlängert sein kann, dass ein Volumenhohlraumanteil im Neuzustand, der zwischen der Lauffläche und einer Fläche, die parallel zur Lauffläche und durch die innersten Punkte der Ausschnitte verläuft, höchstens gleich 10 % ist, und dadurch, dass
- auf diesem mittleren Abschnitt (4C) des Laufstreifens (4) der Oberflächenhohlraumanteil im Neuzustand und auf jeder Fläche bis zu einer Tiefe, die gleich mindestens 50 % der zu verschleißenden Dicke ist, höchstens gleich 10 % ist.

2. Reifen (1) nach Anspruch 1, **dadurch gekennzeichnet, dass** der Laufstreifen (4) dieses Reifens von mindestens zwei Schichten unterschiedlicher Materialien gebildet ist, wobei die äußerste zweite Schicht (42) einen Z-Wert der Makrodispersion größer als 80 aufweist, was bedeutet, dass der Füllstoff in der Elastomermatrix der Zusammensetzung mit einem Dispersionswert Z größer als oder gleich 80 und einem Maximalwert von tan(δ), der als tan(δ)max angegeben ist, kleiner als 0,130, gemessen nach der Norm ASTM D5992-96 mit der Frequenz von 10 Hz und bei einer Temperatur von 60 °C, dispergiert ist.

3. Reifen (1) nach Anspruch 1 oder 2, **dadurch gekennzeichnet, dass** die Reißdehnung der zweiten Schicht, die den radial äußeren Abschnitt des Laufstreifens bildet, kleiner als die der radial innersten ersten Schicht ist.

4. Reifen (1) nach einem der Ansprüche 1 bis 3, **dadurch gekennzeichnet, dass** die Reißenergie der ersten Schicht (41) höher als die der zweiten Schicht (42) ist.

5. Reifen (1) nach einem der Ansprüche 1 bis 4, **dadurch gekennzeichnet, dass** das Verhältnis des Volumens der innersten ersten Schicht (41) zur Summe der Volumen des ersten und zweiten Schicht des Laufstreifens zwischen 25 % und 70 % liegt.

6. Reifen (1) nach einem der Ansprüche 1 bis 5, **dadurch gekennzeichnet, dass** das Profil der ersten Schicht (41) in einer Schnittebene betrachtet, die die Drehachse des Reifens enthält, dafür geeignet ist, dass diese erste Schicht (41) wenigstens über die gesamte Breite des mittleren Abschnitts (4C) des Laufstreifens nach teilweisem Verschleiß des Streifens homogen erscheint.

7. Reifen (1) nach einem der Ansprüche 1 bis 6, **dadurch gekennzeichnet, dass** das Verhältnis zwischen der Dicke der ersten Schicht des Laufstreifens, die über einen Meridianschnitt des Reifens in der Radialrichtung am Axialende der radial äußersten Arbeitsschicht gemessen wird, und der Summe der Dicken der ersten und zweiten Schicht des Laufstreifens zwischen 15 und 50 % beträgt.

8. Reifen (1) nach einem der Ansprüche 1 bis 7, **dadurch gekennzeichnet, dass** eine Zwischenschicht (8) radial zwischen dem Laufstreifen (4) und der Scheitelarmierung (3) eingefügt ist, wobei das Material, das diese Zwischenschicht (8) bildet, dafür gewählt ist, dass es einen Wert tan(δ)max von höchstens gleich 0,100 aufweist, gemessen nach der Norm ASTM D5992-96 mit der Frequenz von 10 Hz und bei einer Temperatur von 60 °C.

9. Reifen (1) nach Anspruch 8, **dadurch gekennzeichnet, dass** die Zwischenschicht (8) einen Verlust bei 60 °C von höchstens gleich 20 % aufweist.

10. Reifen (1) nach einem der Ansprüche 1 bis 9, **dadurch gekennzeichnet, dass** der Volumenhohlraumanteil des mittleren Abschnitts (4C) höchstens gleich 6 % ist.

11. Reifen (1) nach einem der Ansprüche 1 bis 10, **dadurch gekennzeichnet, dass** die versteckten Hohlräume (72), die im mittleren Abschnitt (4C) des Laufstreifens ausgebildet sind, zum großen Teil in der radial innersten ersten Schicht (41) des Laufstreifens vorhanden sind.

## Claims

1. Heavy goods vehicle tyre (1), comprising beads designed to make contact with a mounting rim, these beads being prolonged radially outwards by sidewalls which are themselves joined to either side of a crown portion, this crown portion being covered radially on the outside by a tread (4) having a total thickness of material to be worn which determines a wear limit, and having a tread surface (40) for making contact with a roadway, this tread (4) comprising at least two cut-outs of generally circumferential orientation, the two circumferential cut-outs which are spaced farthest from one another axially delimiting in the tread (4) a central region (4C) and two edge regions (4B), the central portion (4C) having a width Lc of between 35% and 70% of the total width W of the tread (4), this tyre (1) comprising a carcass reinforcement (2) anchored in the beads and extending into the sidewalls and into the crown portion, the crown portion of the tyre comprising a crown reinforcement (3) radially outside the carcass reinforcement, the crown reinforcement (3) comprising at least two working layers (31, 32) having reinforcing elements orientated parallel to one another in the same layer, these reinforcing elements being cords consisting of UHT-grade threads, that is to say threads having a mechanical breaking strength R satisfying the following relation:
R ≥ 4180 - 2130xD, where R is expressed in megaPascals (MPa) and D is the diameter of the thread expressed in millimetres,
this tread (4) being formed of at least two layers of material superimposed in the radial direction, namely a first layer (41) and a second layer (42), the first layer (41) being radially nearer to the crown reinforcement (3) than the second layer (42), this tread (4) being **characterized in that**:
- the material forming the first layer (41) is chosen to have a breaking elongation of more than 600% at a temperature of 60°C,
- in the central portion (4C) of the tread (4) radially surmounting the crown reinforcement (3) and delimited axially by the axially outermost cut-outs (6, 9), a cavity ratio per unit volume as new is defined between the tread surface and a surface parallel to the tread surface and passing through the innermost points of the cut-outs, this cavity ratio per unit volume being not more than 10%, and **in that**
- in this central portion (4C) of the tread (4), the surface cavity ratio as new and over any surface to a depth equal to at least 50% of the thickness to be worn is not more than 10%.

2. Tyre (1) according to Claim 1, **characterized in that** the tread (4) of this tyre is formed of at least two layers of different materials, the second, outermost layer (42) having a macro-dispersion rating Z of more than 80, signifying that the filler is dispersed in the elastomer matrix of the composition with a dispersion rating Z greater than or equal to 80, and a maximum value of tan(δ), denoted tan(δ)max, of less than 0.130, being measured according to the ASTM D5992-96 standard at a frequency of 10 Hz and a temperature of 60°C.

3. Tyre (1) according to Claim 1 or Claim 2, **characterized in that** the breaking elongation of the second layer forming the radially outer portion of the tread is less than that of the first, radially innermost layer.

4. Tyre (1) according to any of Claims 1 to 3, **characterized in that** the breaking energy of the first layer (41) is greater than that of the second layer (42).

5. Tyre (1) according to any of Claims 1 to 4, **characterized in that** the ratio of the volume of the first, innermost layer (41) to the sum of the volumes of the first and second layers of the tread is between 25% and 70%.

6. Tyre (1) according to any of Claims 1 to 5, **characterized in that** the profile of the first layer (41) seen in a sectional plane containing the axis of rotation of the tyre is appropriate for this first layer (41) to appear in a uniform way over at least the whole width of the central portion (4C) of the tread after partial wear of said tread.

7. Tyre (1) according to any of Claims 1 to 6, **characterized in that** the ratio between the thickness of the first layer of the tread, measured on a meridian cross section of the tyre in the radial direction at the axial end of the radially outermost working layer, and the sum of the thicknesses of the first and second layers of the tread is between 15% and 50%.

8. Tyre (1) according to any of Claims 1 to 7, **characterized in that** an intermediate layer (8) is interleaved radially between the tread (4) and the crown reinforcement (3), the material forming this intermediate layer (8) being chosen to have a value of tan(δ)max of not more than 0.100, being measured according to the ASTM D5992-96 standard at a frequency of 10 Hz and a temperature of 60°C.

9. Tyre (1) according to Claim 8, **characterized in that** the intermediate layer (8) has a loss of not more than 20% at 60°C.

10. Tyre (1) according to any of Claims 1 to 9, **characterized in that** the cavity ratio per unit volume of the central portion (4C) is not more than 6%.

11. Tyre (1) according to any of Claims 1 to 10, **characterized in that** the channels (72) formed in the central region of the tread are, for the most part, present in the first, radially innermost layer (41) of the tread.
